(19) **Europäisches Patentamt / European Patent Office / Office européen des brevets**

(11) **EP 4 097 423 B1**

(12) **FASCICULE DE BREVET EUROPEEN**

(45) Date de publication et mention
de la délivrance du brevet:
**28.02.2024 Bulletin 2024/09**

(21) Numéro de dépôt: **21705596.1**

(22) Date de dépôt: **22.01.2021**

(51) Classification Internationale des Brevets (IPC):
**G01D 5/353** *(2006.01)* **G01K 11/3206** *(2021.01)*
**G01L 1/24** *(2006.01)*

(52) Classification Coopérative des Brevets (CPC):
**G01D 5/35316; G01D 5/35383; G01K 11/3206;
G01L 1/246;** G01D 5/35312; G01D 5/35358

(86) Numéro de dépôt international:
**PCT/FR2021/050118**

(87) Numéro de publication internationale:
**WO 2021/152244 (05.08.2021 Gazette 2021/31)**

(54) **SYSTÈME DE MESURE D'UNE PLURALITÉ DE PARAMÈTRES PHYSIQUES EN UN POINT DE MESURE PAR UNE FIBRE OPTIQUE MULTIMODE**

SYSTEM ZUM MESSEN EINER MEHRZAHL VON PHYSIKALISCHEN PARAMETERN AN EINEM MESSPUNKT MIT EINER OPTISCHEN MULTIMODE-FASER

SYSTEM FOR MEASURING A PLURALITY OF PHYSICAL PARAMETERS AT A MEASUREMENT POINT WITH A MULTIMODE OPTICAL FIBER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.01.2020 FR 2000934**

(43) Date de publication de la demande:
**07.12.2022 Bulletin 2022/49**

(73) Titulaire: **SAFRAN
75015 Paris (FR)**

(72) Inventeurs:
• **SALHI, Nassim
77550 MOISSY-CRAMAYEL (FR)**
• **PHAN HUY, Minh Chau
77550 MOISSY-CRAMAYEL (FR)**

(74) Mandataire: **Brevalex
Tour Trinity
1 B Place de la Défense
92400 Courbevoie (FR)**

(56) Documents cités:
• **JIRAPONG LIM ET AL: "Strain and Temperature Sensors Using Multimode Optical Fiber Bragg Gratings and Correlation Signal Processing", IEEE TRANSACTIONS ON INSTRUMENTATION AND MEASUREMENT, IEEE SERVICE CENTER, PISCATAWAY, NJ, US, vol. 51, no. 4, août 2002 (2002-08), XP011073956, ISSN: 0018-9456**
• **EFTIMOV T A ET AL: "SENSING WITH A LP01-LP02 INTERMODAL INTERFEROMETER", JOURNAL OF LIGHTWAVE TECHNOLOGY, IEEE, USA, vol. 11, no. 12, décembre 1993 (1993-12), pages 2150-2156, XP000422678, ISSN: 0733-8724, DOI: 10.1109/50.257983**
• **SHUO FANG ET AL: "A Smart Graded-index Multimode Fiber Based Sensor Unit for Multi-parameter Sensing Applications", OPTICS AND PHOTONICS JOURNAL, vol. 03, no. 02, janvier 2013 (2013-01), pages 265-267, XP055763829, ISSN: 2160-8881, DOI: 10.4236/opj.2013.32B062**

• OLIVEIRA RICARDO ET AL: "Multiparameter POF Sensing Based on Multimode Interference and Fiber Bragg Grating", JOURNAL OF LIGHTWAVE TECHNOLOGY, IEEE, USA, vol. 35, no. 1, janvier 2017 (2017-01), pages 3-9, XP011641245, ISSN: 0733-8724, DOI: 10.1109/JLT.2016.2626793 [extrait le 2017-02-13]

**Description**

**DOMAINE TECHNIQUE**

L'invention se situe dans le domaine de la mesure de paramètres physiques par fibre optique. Elle concerne un système de mesure d'une pluralité de paramètres physiques en un ou plusieurs points de mesure par une ou plusieurs fibres optiques multimodes.

L'invention s'applique notamment à la mesure de la température et de la déformation en un point d'une structure par une fibre optique comportant un réseau de Bragg mais s'applique plus généralement à la mesure de tout paramètre physique susceptible d'être quantifié par un élément sensible d'une fibre optique tel qu'un réseau de Bragg ou une cavité Fabry-Perot. La mesure du paramètre physique peut également s'appuyer sur la diffusion Rayleigh, l'effet Raman ou la diffusion de Brillouin.

**ÉTAT DE LA TECHNIQUE ANTÉRIEURE**

Les capteurs à fibre optique à réseau de Bragg constituent une solution adaptée pour la mesure de la température et de la déformation en un ou plusieurs points d'une structure, notamment lorsque l'espace disponible pour l'intégration des capteurs est limité ou que ces capteurs sont soumis à de fortes contraintes thermiques et/ou mécaniques. Un capteur à fibre optique à réseau de Bragg comprend une fibre optique incluant au moins un réseau de Bragg inscrit sur un tronçon de la fibre optique, appelé tronçon de mesure. En fonction des sollicitations thermomécaniques appliquées sur ce tronçon, les motifs du réseau de Bragg sont plus ou moins espacés les uns des autres. La longueur d'onde de Bragg, pour laquelle un faisceau lumineux est réfléchi, diffère donc en fonction de ces sollicitations. La détermination du décalage de la longueur d'onde de Bragg par rapport à une longueur d'onde de référence permet ainsi de mesurer un paramètre physique au niveau du tronçon de mesure. Afin de mesurer à la fois la température et la déformation, deux fibres optiques sont généralement utilisées. Une première fibre optique comportant un premier réseau de Bragg est montée libre dans un capillaire afin de n'être soumises qu'aux sollicitations thermiques et une deuxième fibre optique comportant un deuxième réseau de Bragg est collée à la structure afin de subir des déformations dues à la fois aux sollicitations thermiques et aux sollicitations mécaniques. La résolution d'un système de deux équations à deux inconnues permet de déterminer chacune des inconnues, à savoir la température et la déformation. Le capteur à fibre optique peut éventuellement mesurer un plus grand nombre de paramètres physiques. Néanmoins, il doit comporter autant de fibres optiques que de paramètres physiques à mesurer. Il s'ensuit une intégration et un montage du capteur relativement compliqués.

Une autre solution pour mesurer deux paramètres physiques en un point à l'aide d'un capteur à fibre optique à réseau de Bragg consiste à discriminer les polarisations du champ électrique du signal traversant la fibre optique. Le réseau de Bragg présente, dans la polarisation transverse électrique (TE ou S), une sensibilité $K_{S,\varepsilon}$ à la déformation et une sensibilité $K_{S,\vartheta}$ à la température. Il présente, dans la polarisation transverse magnétique (TM ou P), une sensibilité $K_{P,\varepsilon}$ à la déformation et une sensibilité $K_{P,\vartheta}$ à la température. Ainsi, pour un unique réseau de Bragg, il est possible de déterminer la déformation et la température au niveau de ce réseau de Bragg. Cette solution est toutefois limitée à la détermination de deux paramètres physiques. Elle est en outre compliquée à mettre en oeuvre du fait de la nécessité de maintenir la polarisation du signal dans la fibre optique.

Il a également été proposé d'utiliser une fibre optique multicoeur dont les coeurs présentent des sensibilités différentes aux différents paramètres physiques à mesurer. Cette solution est décrite dans l'article Chao Li et al, « Simultaneous measurement of refractive index, strain, and température based on a four-core fiber combined with a fiber Bragg grating », Optics & Laser Technology, Vol. 90, 2017, 179-184. Elle est relativement complexe à mettre en oeuvre dans la mesure où elle nécessite d'identifier une fibre multicoeur présentant des sensibilités différentes pour les différents paramètres physiques à mesurer. De plus, la connectique n'est pas normalisée pour ce type de fibres optiques, ce qui rend son interfaçage particulièrement compliqué.

Les solutions précitées pour mesurer une pluralité de paramètres physiques en un point de mesure ne donnent donc pas entière satisfaction. Un but de l'invention est de proposer une technique pour mesurer une pluralité de paramètres physiques à l'aide d'un capteur peu encombrant et présentant une structure relativement simple, permettant sa conception, sa fabrication et son utilisation dans tout type d'industrie.

D'autres solutions connues sont par exemples décrites dans Jirapong Lim et al, "Strain and Température Sensors Using Multimode Optical Fiber Bragg Gratings and Corrélation Signal Processing",IEEE Transactions on Intrumentation and Measurement, vol. 51, no. 4, 1 août 2002, dans Eftimov et al, "Sensing with a LP01-LP02 intermodal interferometer", Journal of Lightwave Technology, IEEE, vol. 11, no. 12, 1 décembre 1993, 2150-2156, dans Shuo Fang et al, "A Smart Graded-index Multimode Fiber Based Sensor Unit for Multi-parameter Sensing Applications", Optics and Photonics Journal, vol. 03, no. 02, 1 janvier 2013, pages 265-267, et dans Oliveira Ricardo et al, "Multiparameter POF Sensing Based on Multimode interférence and Fiber Bragg Grating", Journal of Lightwave Technology, IEEE, vol. 35, no. 1, 1 janvier 2017, pages 3-9.

**EXPOSÉ DE L'INVENTION**

À cet effet, l'invention repose sur une exploitation différenciée des différents modes de propagation des signaux dans une fibre optique multimode. La fibre optique multimode comporte un élément sensible au niveau d'un tronçon de mesure agencé pour réfléchir des signaux optiques dans différents modes de propagation avec une longueur d'onde, ou un décalage de longueur d'onde, variable en fonction des paramètres physiques à mesurer. Le décalage de longueur d'onde étant également variable en fonction du mode de propagation, la résolution d'un système d'équations permet de déterminer chaque paramètre physique à l'aide d'une seule fibre optique et au niveau d'un unique tronçon de mesure de cette fibre.

Plus précisément, l'invention a pour premier objet un système de mesure de P paramètres physiques par fibre optique multimode, P étant un entier supérieur ou égal à deux, comprenant :

- une source lumineuse, agencée pour générer un signal optique source,
- une fibre optique de mesure multimode agencée pour transporter des signaux optiques dans au moins M deuxièmes modes de propagation prédéterminés distincts les uns des autres, M étant un entier supérieur ou égal à P, la fibre optique de mesure comprenant un tronçon de mesure agencé pour réfléchir les signaux optiques avec une longueur d'onde variable en fonction des paramètres physiques à mesurer,

- un dispositif de détection agencé pour mesurer des longueurs d'onde des signaux optiques réfléchis par le tronçon de mesure, et
- un module optique agencé pour générer M signaux optiques à partir du signal optique source, les signaux optiques étant injectés dans la fibre optique de mesure pour se propager chacun dans l'un des deuxièmes modes de propagation, le module optique étant en outre agencé pour transférer les signaux optiques réfléchis vers le dispositif de détection.

La source lumineuse peut être une source lumineuse large bande ou une source lumineuse accordable. Elle présente de préférence une largeur de bande suffisante pour mesurer une multitude de longueurs d'onde. La largeur de bande est par exemple supérieure ou égale à 3 nm.

La fibre optique de mesure est nécessairement une fibre optique multimode. Elle peut être faiblement multimode, c'est-à-dire présenter des propriétés physiques telles que le nombre de modes se propageant varie de quelques unités à quelques dizaines de modes, ou fortement multimode, c'est-à-dire présenter des propriétés physiques telles que le nombre de modes se propageant varie de quelques dizaines à quelques centaines de modes.

Le tronçon de mesure de la fibre optique de mesure joue le rôle d'un élément sensible. Il est agencé pour réfléchir les signaux optiques avec une longueur d'onde variable en fonction des paramètres physiques à mesurer. Autrement dit, il est agencé pour réfléchir chaque signal optique incident en un signal optique réfléchi présentant une longueur d'onde dépendant des différents paramètres physiques à mesurer. Les paramètres de sensibilité du tronçon de mesure aux différents paramètres physiques différent en fonction des modes de propagation des signaux. Ainsi, pour une variation donnée d'un paramètre physique, les variations de longueur d'onde du signal réfléchi par rapport au signal incident sont différentes les unes des autres selon le mode de propagation. La connaissance des longueurs d'onde des différents signaux optiques réfléchis permet ainsi, par la résolution d'un système d'équations, de déterminer les différents paramètres physiques.

Selon une première forme particulière de réalisation, le module optique comprend :

- M fibres optiques de transmission, chaque fibre optique de transmission étant agencée pour transporter un signal optique dans un premier mode de propagation prédéterminé, et
- un multiplexeur modal connecté, d'une part, aux M fibres optiques de transmission et, d'autre part, à la fibre optique de mesure, le multiplexeur modal étant agencé pour transférer les signaux optiques reçus des fibres optiques de transmission vers la fibre optique de mesure en convertissant chaque premier mode de propagation en l'un des deuxièmes modes de propagation, et agencé pour transférer chaque signal optique réfléchi reçu de la fibre optique de mesure vers l'une des fibres optiques de transmission en convertissant chaque deuxième mode de propagation en le premier mode de propagation associé à ladite fibre optique de transmission.

Au sens de l'invention, un multiplexeur modal réalise à la fois une fonction de multiplexage et de démultiplexage. Il pourrait donc être dénommé « multiplexeur/ démultiplexeur modal ». Néanmoins, par souci de concision, il est simplement dénommé « multiplexeur modal » dans le présent document. Le multiplexeur modal permet, d'une part, de générer des signaux optiques présentant différents modes de propagation pour la fibre optique de mesure et, d'autre part, de récupérer les informations de longueur d'onde associées à chaque mode de propagation sur des voies de réception distinctes, en l'occurrence les M fibres optiques de transmission, ce qui facilite la détermination de ces longueurs d'onde. Le multiplexeur modal établit une relation bijective entre le premier mode de propagation de chaque fibre optique de transmission et l'un des deuxièmes modes de propagation de la fibre optique de mesure.

Un exemple de multiplexeur modal au sens de l'invention est décrit dans la demande de brevet US 2017/010463 A1.

Avantageusement, les fibres optiques de transmission sont des fibres optiques monomodes. Chaque premier mode de propagation est alors le mode fondamental. Les fibres optiques de transmission peuvent également être des fibres optiques multimodes. Néanmoins, un seul mode est alors utilisé dans chaque fibre optique de transmission.

Selon une première variante de la première forme particulière de réalisation, le système de mesure comprend, en outre, un diviseur optique agencé pour recevoir le signal optique source, diviser ce signal optique source en M signaux optiques et délivrer à chaque fibre optique de transmission un signal optique dans le premier mode de propagation associé à ladite fibre optique de transmission.

Le diviseur optique répartit la puissance du signal optique source sur l'ensemble des fibres optiques de transmission. La répartition peut être égale ou non.

Le diviseur optique peut en outre être agencé pour recevoir les signaux optiques réfléchis reçus des fibres optiques de transmission, additionner ces signaux optiques réfléchis pour obtenir un signal optique reconstitué et délivrer ledit signal optique reconstitué au dispositif de détection. Le système de mesure peut comprendre, en outre, un circulateur optique agencé pour transférer le signal optique source de la source lumineuse vers le diviseur optique et pour transférer le signal optique reconstitué vers le dispositif de détection.

Selon une deuxième variante de la première forme particulière de réalisation, le système de mesure comprend, en outre, un commutateur optique agencé pour recevoir le signal optique source, découper temporellement ce signal optique source en M signaux optiques et délivrer à chaque fibre optique de transmission un signal optique dans le premier mode de propagation associé à ladite fibre optique de transmission.

Le commutateur optique peut en outre être agencé pour recevoir les signaux optiques réfléchis reçus des fibres optiques de transmission, accoler temporellement ces signaux optiques réfléchis pour obtenir un signal optique reconstitué et délivrer ledit signal optique reconstitué au dispositif de détection. Le système de mesure peut comprendre, en outre, un circulateur optique agencé pour transférer le signal optique source de la source lumineuse vers le commutateur optique et pour transférer le signal optique reconstitué vers le dispositif de détection.

Dans une variante de réalisation de l'invention, le dispositif de détection comprend K détecteurs, K étant un entier supérieur ou égal à deux et inférieur ou égal à M, chaque détecteur étant agencé pour mesurer une longueur d'onde d'un ou plusieurs signaux optiques réfléchis reçus d'une ou plusieurs fibres optiques de transmission. Chaque détecteur est par exemple connecté à une fibre optique de transmission par l'intermédiaire d'un circulateur optique, le circulateur optique étant agencé pour transférer chaque signal optique provenant du diviseur optique ou du commutateur optique vers le multiplexeur modal et pour transférer chaque signal optique réfléchi provenant du multiplexeur modal vers le détecteur.

Lorsque la plage spectrale de fonctionnement du multiplexeur modal est trop limitée pour le nombre de paramètres physiques à mesurer, et donc pour le nombre de deuxièmes modes de propagation à générer, une pluralité de multiplexeurs modaux peuvent être utilisés. Un multiplexeur modal est défini pour une certaine largeur spectrale, typiquement 10 à 30 nm. Or, la largeur spectrale du signal optique source peut dépasser cette valeur et atteindre les 50 à 100 nm. Dans ce cas, le multiplexeur modal n'est pas dimensionné pour couvrir l'ensemble de la plage de travail de la source lumineuse. L'utilisation d'une pluralité de multiplexeurs modaux permet alors de couvrir l'ensemble de la plage spectrale de la source lumineuse. À titre d'exemple, pour une source lumineuse émettant entre 1520 et 1580 nm, soit 60 nm de largeur spectrale, trois multiplexeurs modaux peuvent être utilisés, le premier fonctionnant entre 1520 et 1540 nm, le deuxième entre 1540 et 1560 nm et le troisième entre 1560 et 1580 nm.

Ainsi, selon une deuxième forme particulière de réalisation, le module optique comprend :

- X premières fibres optiques de transmission, X étant un entier supérieur ou égal à deux, chaque première fibre optique de transmission étant agencée pour transporter un signal optique dans un premier mode de propagation prédéterminé,
- une deuxième fibre optique de transmission multimode agencée pour transporter des signaux optiques dans au moins X deuxièmes modes de propagation prédéterminés distincts les uns des autres,
- Y troisièmes fibres optiques de transmission, Y étant un entier supérieur ou égal à deux, chaque troisième fibre optique de transmission étant agencée pour transporter un signal optique dans un troisième mode de propagation prédéterminé, la somme de X et Y étant égale à M,
- une quatrième fibre optique de transmission multimode agencée pour transporter des signaux optiques dans au moins Y deuxièmes modes de propagation prédéterminés distincts les uns des autres et des X deuxièmes modes de propagation,
- un premier multiplexeur modal connecté, d'une part, aux X premières fibres optiques de transmission et, d'autre part, à la deuxième fibre optique de transmission, le premier multiplexeur modal étant agencé pour transférer les signaux optiques reçus des premières fibres optiques de transmission vers la deuxième fibre optique de transmission en convertissant chaque premier mode de propagation en l'un des X deuxièmes modes de propagation, et agencé pour transférer chaque signal optique réfléchi reçu de la deuxième fibre optique de transmission vers l'une des premières fibres optiques de transmission en convertissant chaque deuxième mode de propagation en le premier mode de propagation associé à ladite première fibre optique de transmission,

- un deuxième multiplexeur modal connecté, d'une part, aux Y troisièmes fibres optiques de transmission et, d'autre part, à la quatrième fibre optique de transmission, le deuxième multiplexeur modal étant agencé pour transférer les signaux optiques reçus des troisièmes fibres optiques de transmission vers la quatrième fibre optique de transmission en convertissant chaque troisième mode de propagation en l'un des Y deuxièmes modes de propagation, et agencé pour transférer chaque signal optique réfléchi reçu de la quatrième fibre optique de transmission vers l'une des troisièmes fibres optiques de transmission en convertissant chaque deuxième mode de propagation en le troisième mode de propagation associé à ladite troisième fibre optique de transmission,

- un diviseur optique côté source ou un commutateur optique côté source, le diviseur optique côté source étant agencé pour recevoir le signal optique source, diviser ce signal optique source en X + Y signaux optiques, délivrer à chaque première fibre optique de transmission un signal optique dans le premier mode de propagation associé à ladite première fibre optique de transmission et délivrer à chaque troisième fibre optique de transmission un signal optique dans le troisième mode de propagation associé à ladite troisième fibre optique de transmission, le commutateur optique côté source étant agencé pour recevoir le signal optique source, découper temporellement ce signal optique source en X + Y signaux optiques, délivrer à chaque première fibre optique de transmission un signal optique dans le premier mode de propagation associé à ladite première fibre optique de transmission et délivrer à chaque troisième fibre optique de transmission un signal optique dans le troisième mode de propagation associé à ladite troisième fibre optique de transmission, et

- un diviseur optique côté mesure ou un commutateur optique côté mesure, le diviseur optique côté mesure étant agencé, d'une part, pour recevoir les signaux optiques issus du premier multiplexeur modal et du deuxième multiplexeur modal, additionner ces signaux optiques pour obtenir un signal optique commun et délivrer ce signal optique commun à la fibre optique de mesure et, d'autre part, pour recevoir un signal optique commun réfléchi, diviser ce signal optique commun réfléchi en deux signaux optiques et délivrer chacun de ces signaux optiques à l'un des premier et deuxième multiplexeurs modaux, le commutateur optique côté mesure étant agencé, d'une part, pour recevoir les signaux optiques issus du premier multiplexeur modal et du deuxième multiplexeur modal, accoler temporellement ces signaux optiques pour obtenir un signal optique commun et délivrer ce signal optique commun à la fibre optique de mesure et, d'autre part, pour recevoir un signal optique commun réfléchi, découper temporellement ce signal optique commun réfléchi en deux signaux optiques et délivrer chacun de ces signaux optiques à l'un des premier et deuxième multiplexeurs modaux.

Les premières fibres optiques de transmission et/ou les troisièmes fibres optiques de transmission peuvent être des fibres monomodes, chacun des premiers modes de propagation et/ou chacun des troisièmes modes de propagation étant le mode fondamental.

Le diviseur optique côté source peut comprendre :

- un diviseur optique de premier rang agencé pour recevoir le signal optique source et diviser ce signal optique source en un premier signal optique intermédiaire et un deuxième signal optique intermédiaire,

- un premier diviseur optique de deuxième rang agencé pour recevoir le premier signal optique intermédiaire, diviser ce signal optique intermédiaire en X signaux optiques et délivrer à chaque première fibre optique de transmission un signal optique dans le premier mode de propagation associé à ladite première fibre optique de transmission, et

- un deuxième diviseur optique de deuxième rang agencé pour recevoir le deuxième signal optique intermédiaire, diviser ce signal optique intermédiaire en Y signaux optiques et délivrer à chaque troisième fibre optique de transmission un signal optique dans le troisième mode de propagation associé à ladite troisième fibre optique de transmission.

Le commutateur optique côté source peut comprendre :

- un commutateur optique de premier rang agencé pour recevoir le signal optique source et découper temporellement ce signal optique source en un premier signal optique intermédiaire et un deuxième signal optique intermédiaire,

- un premier commutateur optique de deuxième rang agencé pour recevoir le premier signal optique intermédiaire, découper temporellement ce signal optique intermédiaire en X signaux optiques et délivrer à chaque première fibre optique de transmission un signal optique dans le premier mode de propagation associé à ladite première fibre optique de transmission, et

- un deuxième commutateur optique de deuxième rang agencé pour recevoir le deuxième signal optique intermédiaire, découper temporellement ce signal optique intermédiaire en Y signaux optiques et délivrer à chaque troisième fibre optique de transmission un signal optique dans le troisième mode de propagation associé à ladite troisième fibre optique de transmission.

Dans un mode particulier de réalisation, le système de mesure comprend, en outre, une unité de traitement agencée pour déterminer chacun des P paramètres physiques en fonction des longueurs d'onde des signaux optiques réfléchis par le tronçon de mesure et de P × M paramètres de sensibilité $K_{PP}(j,i)$ prédéterminés, chaque paramètre de sensibilité $K_{PP}(j,i)$ représentant une sensibilité à un paramètre physique $PP_j$ du tronçon de mesure pour le deuxième mode de propagation i, avec i un entier compris entre 1 et M et j un entier compris entre 1 et P.

Chaque diviseur optique peut être agencé pour recevoir des signaux optiques réfléchis, additionner ces signaux optiques et les délivrer à un autre composant. En particulier, le diviseur optique côté source peut être agencé pour recevoir les X + Y signaux optiques réfléchis, additionner ces signaux optiques pour obtenir un signal optique reconstitué et délivrer ce signal optique reconstitué au dispositif de détection.

De manière analogue, chaque commutateur optique peut être agencé pour recevoir des signaux optiques réfléchis, accoler temporellement ces signaux optiques et les délivrer à un autre composant. En particulier, le commutateur optique côté source peut être agencé pour recevoir les X + Y signaux optiques réfléchis, accoler temporellement ces signaux optiques pour obtenir un signal optique reconstitué et délivrer ce signal optique reconstitué au dispositif de détection.

De préférence, les plages de fonctionnement du premier multiplexeur modal et du deuxième multiplexeur modal ne se recouvrent pas et sont comprises dans la plage spectrale de la source lumineuse.

Le système de mesure selon les première et deuxième formes particulières de réalisation permet de mesurer une pluralité de paramètres physiques au niveau du tronçon de mesure d'une unique fibre optique multimode. L'invention est néanmoins applicable à la mesure d'une pluralité de paramètres physiques au niveau de tronçons de mesure de plusieurs fibres optiques multimodes.

Ainsi, l'invention a également pour objet un système de mesure de P + Q paramètres physiques par fibres optiques multimodes, P et Q étant deux entiers supérieurs ou égaux à deux, comprenant :

- une source lumineuse, agencée pour générer un signal optique source,
- une première fibre optique de mesure multimode agencée pour transporter des signaux optiques dans au moins M deuxièmes modes de propagation prédéterminés distincts les uns des autres, M étant un entier supérieur ou égal à P, la première fibre optique de mesure comprenant un premier tronçon de mesure agencé pour réfléchir les signaux optiques avec une longueur d'onde variable en fonction des paramètres physiques à mesurer,
- une deuxième fibre optique de mesure multimode agencée pour transporter des signaux optiques dans au moins N quatrièmes modes de propagation prédéterminés distincts les uns des autres, N étant un entier supérieur ou égal à Q, la deuxième fibre optique de mesure comprenant un deuxième tronçon de mesure agencé pour réfléchir les signaux optiques avec une longueur d'onde variable en fonction des paramètres physiques à mesurer,
- un dispositif de détection agencé pour mesurer des longueurs d'onde des signaux optiques réfléchis par chacune des fibres optique de mesure, et
- un module optique agencé pour générer, à partir du signal optique source, M + N signaux optiques, M signaux optiques étant injectés dans la première fibre optique de mesure pour se propager chacun dans l'un des deuxièmes modes de propagation et N signaux optiques étant injectés dans la deuxième fibre optique de mesure pour se propager chacun dans l'un des quatrièmes modes de propagation, le module optique étant en outre agencé pour transférer les signaux optiques réfléchis vers le dispositif de détection.

Selon une forme particulière de réalisation, le module optique comprend :

- M premières fibres optiques de transmission, M étant un entier supérieur ou égal à P, chaque première fibre optique de transmission étant agencée pour transporter un signal optique dans un premier mode de propagation prédéterminé,
- un premier multiplexeur modal connecté, d'une part, aux M premières fibres optiques et, d'autre part, à la première fibre optique de mesure, le premier multiplexeur modal étant agencé pour transférer les signaux optiques reçus des premières fibres optiques de transmission vers la première fibre optique de mesure en convertissant chaque premier mode de propagation en l'un des deuxièmes modes de propagation, et agencé pour transférer chaque signal optique réfléchi reçu de la première fibre optique de mesure vers l'une des premières fibres optiques de transmission en convertissant chaque deuxième mode de propagation en le premier mode de propagation associé à ladite première fibre optique de transmission,
- N deuxièmes fibres optiques de transmission, N étant un entier supérieur ou égal à Q, chaque deuxième fibre optique de transmission étant agencée pour transporter un signal optique dans un troisième mode de propagation prédéterminé,
- un deuxième multiplexeur modal connecté, d'une part, aux N deuxièmes fibres optiques de transmission et, d'autre part, à la deuxième fibre optique de mesure, le deuxième multiplexeur modal étant agencé pour transférer les signaux optiques reçus des deuxièmes fibres optiques de transmission vers la deuxième fibre optique de mesure en convertissant chaque troisième mode de propagation en l'un des quatrièmes modes de propagation, et agencé pour transférer chaque signal optique réfléchi reçu de la deuxième fibre optique de mesure vers l'une des deuxièmes fibres optiques de transmission en convertissant chaque quatrième mode de propagation en le troisième mode de propagation associé à ladite deuxième fibre optique de transmission, et

- un diviseur optique ou un commutateur optique, le diviseur optique étant agencé pour recevoir le signal optique source, diviser ce signal optique source en M + N signaux optiques, délivrer à chaque première fibre optique de transmission un signal optique dans le premier mode de propagation associé à ladite première fibre optique de transmission et délivrer à chaque deuxième fibre optique de transmission un signal optique dans le troisième mode de propagation associé à ladite deuxième fibre optique de transmission, le commutateur optique étant agencé pour recevoir le signal optique source, découper temporellement ce signal optique source en M + N signaux optiques, délivrer à chaque première fibre optique de transmission un signal optique dans le premier mode de propagation associé à ladite première fibre optique de transmission et délivrer à chaque deuxième fibre optique de transmission un signal optique dans le troisième mode de propagation associé à ladite deuxième fibre optique de transmission.

Les premières fibres optiques de transmission et/ou les deuxièmes fibres optiques de transmission peuvent être des fibres optiques monomodes, chacun des premiers modes de propagation et/ou chacun des troisièmes modes de propagation étant le mode fondamental.

Le diviseur optique peut comprendre :

- un diviseur optique de premier rang agencé pour recevoir le signal optique source et diviser ce signal optique source en un premier signal optique intermédiaire et un deuxième signal optique intermédiaire,
- un premier diviseur optique de deuxième rang agencé pour recevoir le premier signal optique intermédiaire, diviser ce signal optique intermédiaire en M signaux optiques et délivrer à chaque première fibre optique de transmission un signal optique dans le premier mode de propagation associé à ladite première fibre optique de transmission, et
- un deuxième diviseur optique de deuxième rang agencé pour recevoir le deuxième signal optique intermédiaire, diviser ce signal optique intermédiaire en N signaux optiques et délivrer à chaque deuxième fibre optique de transmission un signal optique dans le troisième mode de propagation associé à ladite deuxième fibre optique de transmission.

Le commutateur optique peut comprendre :

- un commutateur optique de premier rang agencé pour recevoir le signal optique source et découper temporellement ce signal optique source en un premier signal optique intermédiaire et un deuxième signal optique intermédiaire,
- un premier commutateur optique de deuxième rang agencé pour recevoir le premier signal optique intermédiaire, découper temporellement ce signal optique intermédiaire en M signaux optiques et délivrer à chaque première fibre optique de transmission un signal optique dans le premier mode de propagation associé à ladite première fibre optique de transmission, et
- un deuxième commutateur optique de deuxième rang agencé pour recevoir le deuxième signal optique intermédiaire, découper temporellement ce signal optique intermédiaire en N signaux optiques et délivrer à chaque deuxième fibre optique de transmission un signal optique dans le troisième mode de propagation associé à ladite deuxième fibre optique de transmission.

Le système de mesure peut comprendre, en outre, une unité de traitement agencée pour déterminer chacun des P + Q paramètres physiques en fonction des longueurs d'onde des signaux optiques réfléchis par les fibres optiques de mesure, de $P \times M$ paramètres de sensibilité $K_{PP}(j,i)$ prédéterminés et de $Q \times N$ paramètres de sensibilité $K_{PP}(l,k)$ prédéterminés, chaque paramètre de sensibilité $K_{pp}(j,i)$ représentant une sensibilité à un paramètre physique $PP_j$ du premier tronçon de mesure pour le deuxième mode de propagation i, avec i un entier compris entre 1 et M et j un entier compris entre 1 et P, chaque paramètre de sensibilité $K_{PP}(l,k)$ représentant une sensibilité à un paramètre physique $PP_l$ du deuxième tronçon de mesure pour le quatrième mode de propagation k, avec k un entier compris entre 1 et N et l un entier compris entre 1 et Q.

Les différentes caractéristiques facultatives et avantages liés système de mesure de P paramètres physiques par fibre optique multimode décrits précédemment sont applicables au système de mesure de P + Q paramètres physiques par fibres optiques multimodes.

Dans chacun des systèmes de mesure selon l'invention, chaque tronçon de mesure comprend par exemple un réseau de Bragg ou une cavité Fabry-Perot.

## BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :

- la figure 1 représente un premier exemple de système de mesure de P paramètres physiques par une fibre optique multimode selon l'invention ;
- la figure 2 représente un deuxième exemple de système de mesure de P paramètres physiques par une fibre optique multimode selon l'invention, le système de mesure comprenant une pluralité de détecteurs ;

- la figure 3 représente un troisième exemple de système de mesure de P paramètres physiques par une fibre optique multimode selon l'invention, le système de mesure comprenant un détecteur commun à deux modes de propagation ;

- la figure 4 représente un quatrième exemple de système de mesure de P paramètres physiques par une fibre optique multimode selon l'invention, le système de mesure comprenant deux multiplexeurs optiques ;

- la figure 5 représente un exemple de système de mesure de P + Q paramètres physiques par deux fibres optiques multimodes selon l'invention.

## DESCRIPTION DÉTAILLÉE

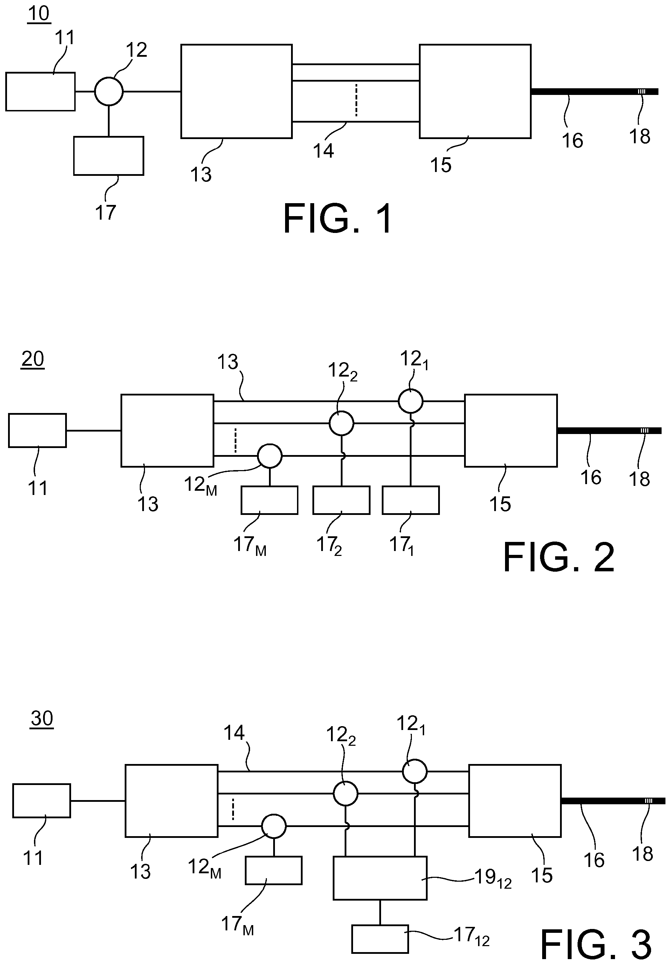

La figure 1 représente un premier exemple de système de mesure de paramètres physiques par une fibre optique multimode selon l'invention. Le système de mesure 10 permet de mesurer P paramètres physiques, P étant un entier supérieur ou égal à deux. Il comprend une source lumineuse 11, un circulateur optique 12, un commutateur optique 13, M fibres optiques monomodes 14, un multiplexeur/ démultiplexeur modal 15, appelé par la suite plus simplement « multiplexeur modal 15 », une fibre optique multimode 16 et un dispositif de détection 17. Le nombre M est un entier supérieur ou égal à P. Dans l'exemple de la figure 1, les fibres optiques 14 permettent de transporter des signaux optiques dans le mode fondamental. Le système de mesure selon l'invention permet cependant d'utiliser des fibres optiques multimodes. Le signal est alors transporté dans chaque fibre optique selon un seul mode de propagation, appelé « premier mode de propagation ». Le premier mode de propagation peut différer selon les fibres optiques. La fibre optique multimode 16 est agencée pour transporter des signaux optiques dans au moins M deuxièmes modes de propagation prédéterminés distincts les uns des autres. Elle comporte un réseau de Bragg 18 sur un tronçon, appelé « tronçon de mesure ». La source lumineuse 11 peut être une source large bande ou une source accordable. Une source large bande présente par exemple une largeur de bande supérieure ou égale à 3 nm. Le circulateur optique 12 reçoit sur une première entrée/sortie un signal optique source provenant de la source lumineuse 11 et transfère ce signal optique source sur une deuxième entrée/sortie, à destination du commutateur optique 13. Le commutateur optique 13 est agencé pour recevoir le signal optique source, découper temporellement ce signal en M signaux optiques identiques et délivrer à chaque fibre optique 14 l'un de ces signaux optiques dans le mode fondamental. En lieu et place du commutateur optique 13, un diviseur optique pourrait être utilisé. Le diviseur optique divise la puissance du signal optique source de façon à générer M signaux optiques identiques. Le multiplexeur modal 15 est connecté aux fibres optiques 14 et à la fibre optique multimode 16. Il est agencé pour transférer les signaux optiques reçus des fibres optiques 14 vers la fibre optique multimode 16 en convertissant chaque premier mode de propagation en l'un des M deuxièmes modes de propagation. Il est en outre agencé pour transférer chaque signal optique réfléchi reçu de la fibre optique multimode 16 vers l'une des fibres optiques 14 en convertissant chaque deuxième mode de propagation en le mode fondamental. Chaque signal optique réfléchi est dirigé par le multiplexeur modal 15 vers la fibre optique 14 dont il provient, de façon à établir une relation bijective entre chaque fibre optique 14 et un deuxième mode de propagation de la fibre optique multimode. Le dispositif de détection 17 est agencé pour mesurer les longueurs d'onde des signaux optiques réfléchis transportés par les fibres optiques 14.

Le système de mesure 10 peut comprendre, en outre, une unité de traitement, non représentée, agencée pour déterminer chacun des P paramètres physiques en fonction des longueurs d'onde des signaux optiques réfléchis déterminés par le dispositif de détection 17 et de P x M paramètres de sensibilité $K_{PP}(j,i)$ prédéterminés. Chaque paramètre de sensibilité $K_{PP}(j,i)$ représente une sensibilité à un paramètre physique $PP_j$ du réseau de Bragg 18 pour le deuxième mode de propagation i, avec i un entier compris entre 1 et M et j un entier compris entre 1 et P.

Les paramètres physiques sont déterminés par la résolution d'un système de M équations à P inconnues, chaque équation pour le mode i s'écrivant :

$$\Delta\lambda_i = \sum_{j=1}^{P} K_{PP}(j,i) \times PP_j$$

où $\Delta\lambda_i$ représente une variation de la longueur d'onde d'un signal optique associé au mode i par rapport à une longueur d'onde de référence.

Lorsque le nombre de paramètres à mesurer est inférieur au nombre de modes (P < M), le système d'équations est surdéterminé. Au moins certains paramètres physiques peuvent alors être déterminés plusieurs fois et donc déterminés plus précisément.

La figure 2 représente un deuxième exemple de système de mesure de P paramètres physiques par une fibre optique multimode selon l'invention. Le système de mesure 20 selon cet exemple de réalisation diffère essentiellement du système de mesure 10 décrit en référence à la figure 1 en ce que le dispositif de détection 17 est formé de M détecteurs indépendants $17_1$, $17_2$, ... $17_M$. Le système de mesure 20 comprend M circulateurs optiques $12_1$, $12_2$, ..., $12_M$. Chaque circulateur optique $12_i$ est connecté à deux tronçons de l'une des fibres optiques 14 et à un détecteur $17_i$, de sorte que chaque signal optique provenant du commutateur optique 13 soit transféré vers le multiplexeur modal 15 et que chaque signal optique réfléchi provenant du multiplexeur modal 15 soit transféré vers le détecteur $17_i$ associé. L'unité de traitement peut récupérer, de manière analogue, les longueurs d'onde des différents signaux optiques réfléchis afin de déterminer les P paramètres physiques au niveau du réseau de Bragg 18.

La figure 3 représente un troisième exemple de système de mesure de P paramètres physiques par une fibre optique multimode selon l'invention. Le système de mesure 30 selon cet exemple de réalisation diffère essentiellement du système de mesure 20 décrit en référence à la figure 2 en ce que le dispositif de détection 17 est formé d'un nombre de détecteurs strictement inférieur à M. Le système de mesure 30 comprend toujours M circulateurs optiques $12_i$ ; il comporte en outre un ou plusieurs combineurs de signaux. En l'occurrence, il comporte un combineur de signaux $19_{12}$ connecté aux circulateurs optiques $12_1$ et $12_2$ de façon à recevoir les signaux optiques réfléchis transportés par deux fibres optiques 14, et agencé pour additionner ou accoler temporellement ces signaux et les transférer au détecteur $17_{12}$. Les autres détecteurs $17_i$ reçoivent un unique signal optique réfléchi.

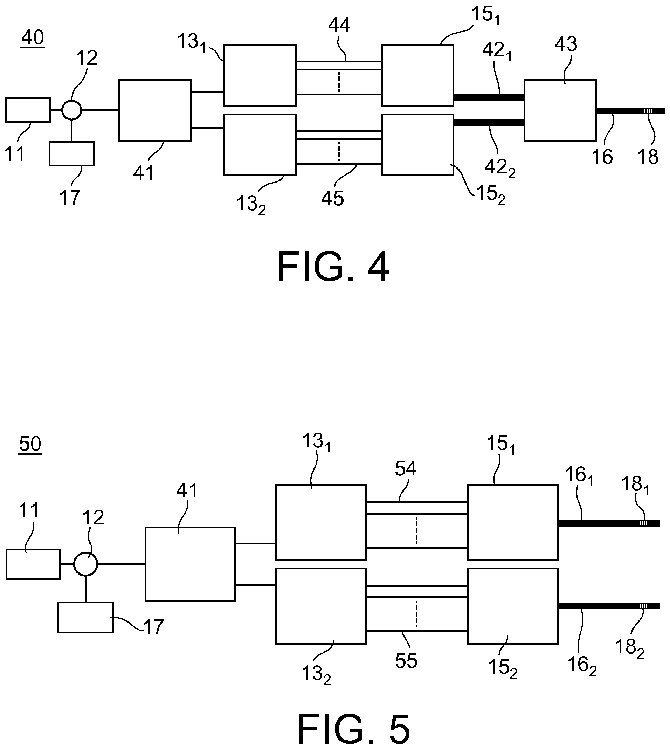

La figure 4 représente un quatrième exemple de système de mesure de P paramètres physiques par une fibre optique multimode selon l'invention. Le système de mesure 40 comprend également une source lumineuse 11, un circulateur optique 12, une fibre optique multimode 16 et un dispositif de détection 17. Il comporte en outre un commutateur optique de premier rang 41, un premier commutateur optique de deuxième rang $13_1$, un deuxième commutateur optique de deuxième rang $13_2$, X premières fibres optiques de transmission monomodes 44, une deuxième fibre optique de transmission multimode de $42_1$, Y troisièmes fibres optiques de transmission monomodes 45, une quatrième fibre optique de transmission multimode $42_2$, un premier multiplexeur modal $15_1$, un deuxième multiplexeur modal $15_2$ et un commutateur optique côté mesure 43. Le commutateur optique 41 est agencé pour recevoir le signal optique source et le découper temporellement en un premier signal optique intermédiaire et un deuxième signal optique intermédiaire. Le premier commutateur optique $13_1$ est agencé, de manière analogue au commutateur optique 13, pour recevoir le premier signal optique intermédiaire, le découper temporellement en X signaux optiques et délivrer chaque signal optique à l'une des fibres optiques de transmission 44. Le deuxième commutateur optique $13_2$ est agencé pour recevoir le deuxième signal optique intermédiaire, le découper temporellement en Y signaux optiques et délivrer chaque signal optique à l'une des fibres optiques de transmission 45. Les premières fibres optiques de transmission 44 et les troisièmes fibres optiques de transmission 45 sont chacune agencées pour transporter un signal optique dans le monde fondamental. Le nombre total de premières et troisièmes fibres optiques de transmission (X + Y) est égal à M, avec M supérieur ou égal à P. La première fibre optique de transmission $42_1$ est agencée pour transporter des signaux optiques dans au moins X deuxièmes modes de propagation prédéterminés distincts les uns des autres et choisis parmi les M deuxièmes modes de propagation de la fibre optique multimode 16. La quatrième fibre optique de transmission $42_2$ est agencée pour transporter des signaux optiques dans au moins Y deuxièmes modes de propagation prédéterminés distincts les uns des autres et des X deuxièmes modes de propagation, et choisis parmi les M deuxièmes modes de propagation de la fibre optique multimode 16. Le premier multiplexeur modal $15_1$ est connecté aux fibres optiques de transmission 44 et à la deuxième fibre optique de transmission $42_1$. Il est agencé, d'une part, pour transférer chaque signal optique reçu des fibres optiques de transmission 44 vers la deuxième fibre optique de transmission $42_1$ en convertissant le mode fondamental en l'un des X deuxièmes modes de propagation et, d'autre part, pour transférer chaque signal optique réfléchi reçu de la deuxième fibre optique de transmission $42_1$ vers l'une des fibres optiques de transmission 44 en convertissant chaque deuxième mode de propagation en le mode fondamental. Le deuxième multiplexeur modal $15_2$ est connecté aux fibres optiques de transmission 45 et à la quatrième fibre optique de transmission $42_2$. Il est agencé, d'une part, pour transférer chaque signal optique reçu des fibres optiques de transmission 45 vers la quatrième fibre optique de transmission $42_2$ en convertissant le mode fondamental en l'un des Y deuxièmes modes de propagation et, d'autre part, pour transférer chaque signal optique réfléchi reçu de la quatrième fibre optique de transmission $42_2$ vers l'une des fibres optiques de transmission 45 en convertissant chaque deuxième mode de propagation en le mode fondamental. Le commutateur optique côté mesure 43 est agencé, d'une part, pour recevoir les X signaux optiques provenant du premier multiplexeur modal $15_1$ et les Y signaux optiques provenant du deuxième multiplexeur modal $15_2$, pour accoler temporellement ces signaux optiques pour obtenir un signal optique commun et délivrer ce signal optique commun à la fibre optique multimode 16 et, d'autre part, pour recevoir un signal optique commun réfléchi, découper temporellement ce signal optique en deux signaux optiques et délivrer chaque signal optique à l'un des premier et deuxième multiplexeurs modaux $15_1$, $15_2$.

La figure 5 représente un exemple de système de mesure de P + Q paramètres physiques par deux fibres optiques multimodes selon l'invention. Le système de mesure 50 comprend également une source lumineuse 11, un circulateur optique 12 et un dispositif de détection 17. Il comporte en outre un commutateur optique de premier rang 41, un premier commutateur optique de deuxième rang $13_1$, un deuxième commutateur optique de deuxième rang $13_2$, un premier multiplexeur modal $15_1$ et un deuxième multiplexeur modal $15_2$, respectivement identiques à ceux du système de mesure 40. Le système de mesure 50 comporte aussi M premières fibres optiques de transmission monomodes 54, N deuxièmes fibres optiques de transmission 55, une première fibre optique de mesure multimode $16_1$ et une deuxième fibre optique de mesure multimode $16_2$. Le premier commutateur optique $13_1$ est agencé pour recevoir le premier signal optique intermédiaire issu du commutateur optique 41, le découper temporellement en M signaux optiques et délivrer chaque signal optique à l'une des fibres optiques de transmission 54. Le deuxième commutateur optique $13_2$ est agencé pour recevoir le deuxième signal optique intermédiaire issu du commutateur optique 41, le découper temporellement en N signaux optiques et délivrer chaque signal optique à l'une des fibres optiques de transmission 55. Les premières fibres optiques de transmission 54 et les troisièmes fibres optiques de transmission 55 sont chacune agencées pour transporter un signal optique dans le monde fondamental. La première fibre optique de mesure $16_1$ est agencée pour transporter des signaux optiques dans au moins M deuxièmes modes de propagation prédéterminés distincts les uns des autres, M étant un entier supérieur ou égal à P, et comprend un premier réseau de Bragg $18_1$. La deuxième fibre optique de mesure $16_2$ est agencée pour transporter des signaux optiques dans au moins N quatrièmes modes de propagation prédéterminés distincts les uns des autres, N étant un entier supérieur ou égal à Q., et comprend un deuxième réseau de Bragg $18_2$. Les N quatrièmes modes de propagation peuvent être identiques ou non aux M deuxièmes modes de propagation. Le premier multiplexeur modal $15_1$ est connecté aux fibres optiques de transmission 54 et à la première fibre optique de mesure $16_1$. Il est agencé, d'une part, pour transférer chaque signal optique reçu des fibres optiques de transmission 54 vers la fibre optique de mesure $16_1$ en convertissant le mode fondamental en l'un des M deuxièmes modes de propagation et, d'autre part, pour transférer chaque signal optique réfléchi reçu de la première fibre optique de mesure $16_1$ vers l'une des fibres optiques de transmission 54 en convertissant chaque deuxième mode de propagation en le mode fondamental. Le deuxième multiplexeur modal $15_2$ est connecté aux fibres optiques de transmission 55 et à la deuxième fibre optique de mesure $16_2$. Il est agencé, d'une part, pour transférer chaque signal optique reçu des fibres optiques de transmission 55 vers la fibre optique de mesure $16_2$ en convertissant le mode fondamental en l'un des N quatrièmes modes de propagation et, d'autre part, pour transférer chaque signal optique réfléchi reçu de la deuxième fibre optique de mesure $16_2$ vers l'une des fibres optiques de transmission 55 en convertissant chaque quatrième mode de propagation en le mode fondamental.

Le système de mesure 50 peut comprendre, en outre, une unité de traitement, non représentée, agencée pour déterminer chacun des P et Q paramètres physiques en fonction des longueurs d'onde des signaux optiques réfléchis déterminés par le dispositif de détection 17, de P × M paramètres de sensibilité $K_{PP}(j,i)$ prédéterminés et de Qx N paramètres de sensibilité $K_{PP}(l,k)$ prédéterminés. Chaque paramètre de sensibilité $K_{PP}(j,i)$ représente une sensibilité à un paramètre physique $PP_j$

du réseau de Bragg $18_1$ pour le deuxième mode de propagation i, avec i un entier compris entre 1 et M et j un entier compris entre 1 et P. Chaque paramètre de sensibilité $K_{PP}(l,k)$ représente une sensibilité à un paramètre physique $PP_l$ du réseau de Bragg $18_2$ pour le quatrième mode de propagation k, avec k un entier compris entre 1 et N et l un entier compris entre 1 et Q.

**Revendications**

1. Système de mesure de P paramètres physiques par fibre optique multimode, P étant un entier supérieur ou égal à deux, comprenant :

   - une source lumineuse (11), agencée pour générer un signal optique source,
   - une fibre optique de mesure (16) multimode agencée pour transporter des signaux optiques dans au moins M deuxièmes modes de propagation prédéterminés distincts les uns des autres, M étant un entier supérieur ou égal à P, la fibre optique de mesure (16) comprenant un tronçon de mesure (18) agencé pour réfléchir les signaux optiques avec une longueur d'onde variable en fonction des paramètres physiques à mesurer,
   - un dispositif de détection (17, $17_1$, $17_2$, $17_M$, $17_{12}$) agencé pour mesurer des longueurs d'onde des signaux optiques réfléchis par le tronçon de mesure, et
   - un module optique (13, $13_1$, $13_2$, 14, 15, $15_1$, $15_2$, 41, $42_1$, $42_2$, 43, 44, 45) agencé pour générer M signaux optiques à partir du signal optique source, les signaux optiques étant injectés dans la fibre optique de mesure (16) pour se propager chacun dans l'un des deuxièmes modes de propagation, le module optique étant en outre agencé pour transférer les signaux optiques réfléchis vers le dispositif de détection (17, $17_1$, $17_2$, $17_M$, $17_{12}$).

2. Système de mesure selon la revendication 1, dans lequel le module optique comprend :

   - M fibres optiques de transmission (14), chaque fibre optique de transmission étant agencée pour transporter un signal optique dans un premier mode de propagation prédéterminé, et
   - un multiplexeur modal (15) connecté, d'une part, aux M fibres optiques de transmission (14) et, d'autre part, à la fibre optique de mesure (16), le multiplexeur modal étant agencé pour transférer les signaux optiques reçus des fibres optiques de transmission vers la fibre optique de mesure en convertissant chaque premier mode de propagation en l'un des deuxièmes modes de propagation, et agencé pour transférer chaque signal optique réfléchi reçu de la fibre optique de mesure vers l'une des fibres optiques de transmission en convertissant chaque deuxième mode de propagation en le premier mode de propagation associé à ladite fibre optique de transmission.

3. Système de mesure selon la revendication 2, dans lequel les fibres optiques de transmission (14) sont des fibres optiques monomodes, chacun des premiers modes de propagation étant le mode fondamental.

4. Système de mesure selon l'une des revendications 2 et 3 comprenant, en outre, un diviseur optique (13) agencé pour recevoir le signal optique source, diviser ce signal optique source en M signaux optiques et délivrer à chaque fibre optique de transmission (14) un signal optique dans le premier mode de propagation associé à ladite fibre optique de transmission.

5. Système de mesure selon la revendication 4, dans lequel le diviseur optique (13) est en outre agencé pour recevoir les signaux optiques réfléchis reçus des fibres optiques de transmission (14), additionner ces signaux optiques réfléchis pour obtenir un signal optique reconstitué et délivrer ledit signal optique reconstitué au dispositif de détection (17), le système de mesure (10) comprenant, en outre, un circulateur optique (12) agencé pour transférer le signal optique source de la source lumineuse (11) vers le diviseur optique (13) et pour transférer le signal optique reconstitué vers le dispositif de détection (17).

6. Système de mesure selon l'une des revendications 2 et 3 comprenant, en outre, un commutateur optique (13) agencé pour recevoir le signal optique source, découper temporellement ce signal optique source en M signaux optiques et délivrer à chaque fibre optique de transmission (14) un signal optique dans le premier mode de propagation associé à ladite fibre optique de transmission.

7. Système de mesure selon la revendication 6, dans lequel le commutateur optique (13) est en outre agencé pour recevoir les signaux optiques réfléchis reçus des fibres optiques de transmission (14), accoler temporellement ces signaux optiques réfléchis pour obtenir un signal optique reconstitué et délivrer ledit signal optique reconstitué au dispositif de détection (17), le système de mesure (10) comprenant, en outre, un circulateur optique agencé pour transférer le signal optique source de la source lumineuse vers le commutateur optique et pour transférer le signal optique reconstitué vers le dispositif de détection.

8. Système de mesure selon l'une des revendications 2 à 4 et 6, dans lequel le dispositif de détection comprend K détecteurs ($17_1$, $17_2$, $17_M$, $17_{12}$), K étant un entier supérieur ou égal à deux et inférieur ou égal à M, chaque détecteur étant agencé pour mesurer une longueur d'onde d'un ou plusieurs signaux optiques réfléchis reçus d'une ou plusieurs fibres optiques de transmission (14).

9. Système de mesure selon la revendication 1, dans lequel le module optique comprend :

- X premières fibres optiques de transmission (44), X étant un entier supérieur ou égal à deux, chaque première fibre optique de transmission étant agencée pour transporter un signal optique dans un premier mode de propagation prédéterminé,
- une deuxième fibre optique de transmission ($42_1$) multimode agencée pour transporter des signaux optiques dans au moins X deuxièmes modes de propagation prédéterminés distincts les uns des autres,
- Y troisièmes fibres optiques de transmission (45), Y étant un entier supérieur ou égal à deux, chaque troisième fibre optique de transmission étant agencée pour transporter un signal optique dans un troisième mode de propagation prédéterminé, la somme de X et Y étant égale à M,
- une quatrième fibre optique de transmission ($42_2$) multimode agencée pour transporter des signaux optiques dans au moins Y deuxièmes modes de propagation prédéterminés distincts les uns des autres et des X deuxièmes modes de propagation,
- un premier multiplexeur modal ($15_1$) connecté, d'une part, aux X premières fibres optiques de transmission (44) et, d'autre part, à la deuxième fibre optique de transmission ($42_1$), le premier multiplexeur modal étant agencé pour transférer les signaux optiques reçus des premières fibres optiques de transmission vers la deuxième fibre optique de transmission en convertissant chaque premier mode de propagation en l'un des X deuxièmes modes de propagation, et agencé pour transférer chaque signal optique réfléchi reçu de la deuxième fibre optique de transmission vers l'une des premières fibres optiques de transmission en convertissant chaque deuxième mode de propagation en le premier mode de propagation associé à ladite première fibre optique de transmission,
- un deuxième multiplexeur modal ($15_2$) connecté, d'une part, aux Y troisièmes fibres optiques de transmission (45) et, d'autre part, à la quatrième fibre optique de transmission ($42_2$), le deuxième multiplexeur modal étant agencé pour transférer les signaux optiques reçus des troisièmes fibres optiques de transmission vers la quatrième fibre optique de transmission en convertissant chaque troisième mode de propagation en l'un des Y deuxièmes modes de propagation, et agencé pour transférer chaque signal optique réfléchi reçu de la quatrième fibre optique de transmission vers l'une des troisièmes fibres optiques de transmission en convertissant chaque deuxième mode de propagation en le troisième mode de propagation associé à ladite troisième fibre optique de transmission,

- un diviseur optique côté source ($13_1$, $13_2$, 41) ou un commutateur optique côté source ($13_1$, $13_2$, 41), le diviseur optique côté source étant agencé pour recevoir le signal optique source, diviser ce signal optique source en X + Y signaux optiques, délivrer à chaque première fibre optique de transmission (44) un signal optique dans le premier mode de propagation associé à ladite première fibre optique de transmission et délivrer à chaque troisième fibre optique de transmission (45) un signal optique dans le troisième mode de propagation associé à ladite troisième fibre optique de transmission, le commutateur optique côté source étant agencé pour recevoir le signal optique source, découper temporellement ce signal optique source en X + Y signaux optiques, délivrer à chaque première fibre optique de transmission (44) un signal optique dans le premier mode de propagation associé à ladite première fibre optique de transmission et délivrer à chaque troisième fibre optique de transmission (45) un signal optique dans le troisième mode de propagation associé à ladite troisième fibre optique de transmission, et

- un diviseur optique côté mesure (43) ou un commutateur optique côté mesure (43), le diviseur optique côté mesure étant agencé, d'une part, pour recevoir les signaux optiques issus du premier multiplexeur modal ($15_1$) et du deuxième multiplexeur modal ($15_2$), additionner ces signaux optiques pour obtenir un signal optique commun et délivrer ce signal optique commun à la fibre optique de mesure (16) et, d'autre part, pour recevoir un signal optique commun réfléchi, diviser ce signal optique commun réfléchi en deux signaux optiques et délivrer chacun de ces signaux optiques à l'un des premier et deuxième multiplexeurs modaux ($15_1$, $15_2$), le commutateur optique côté mesure étant agencé, d'une part, pour recevoir les signaux optiques issus du premier multiplexeur modal ($15_1$) et du deuxième multiplexeur modal ($15_2$), accoler temporellement ces signaux optiques pour obtenir un signal optique commun et délivrer ce signal optique commun à la fibre optique de mesure (16) et, d'autre part, pour recevoir un signal optique commun réfléchi, découper temporellement ce signal optique commun réfléchi en deux signaux optiques et délivrer chacun de ces signaux optiques à l'un des premier et deuxième multiplexeurs modaux ($15_1$, $15_2$).

10. Système de mesure selon la revendication 9, dans lequel les premières fibres optiques de transmission (44) et/ou les troisièmes fibres optiques de transmission (45) sont des fibres optiques monomodes, chacun des premiers modes de propagation et/ou chacun des troisièmes modes de propagation étant le mode fondamental.

11. Système de mesure selon l'une des revendications précédentes comprenant, en outre, une unité de traitement agencée pour déterminer chacun des P paramètres physiques en fonction des longueurs d'onde des signaux optiques réfléchis par le tronçon de mesure et de P x M paramètres de sensibilité $K_{PP}(j,i)$ prédéterminés, chaque paramètre de sensibilité $K_{PP}(j,i)$ représentant une sensibilité à un paramètre physique $PP_j$ du tronçon de mesure pour le deuxième mode de propagation i, avec i un entier compris entre 1 et M et j un entier compris entre 1 et P.

12. Système de mesure de P + Q paramètres physiques par fibres optiques multimodes, P et Q étant deux entiers supérieurs ou égaux à deux, comprenant :

- une source lumineuse (11), agencée pour générer un signal optique source,
- une première fibre optique de mesure ($16_1$) multimode agencée pour transporter des signaux optiques dans au moins M deuxièmes modes de propagation prédéterminés distincts les uns des autres, M étant un entier supérieur ou égal à P, la première fibre optique de mesure comprenant un premier tronçon de mesure ($18_1$) agencé pour réfléchir les signaux optiques avec une longueur d'onde variable en fonction des paramètres physiques à mesurer,
- une deuxième fibre optique de mesure ($16_2$) multimode agencée pour transporter des signaux optiques dans au moins N quatrièmes modes de propagation prédéterminés distincts les uns des autres, N étant un entier supérieur ou égal à Q, la deuxième fibre optique de mesure comprenant un deuxième tronçon de mesure ($18_2$) agencé pour réfléchir les signaux optiques avec une longueur d'onde variable en fonction des paramètres physiques à mesurer,
- un dispositif de détection (17) agencé pour mesurer des longueurs d'onde des signaux optiques réfléchis par chacune des fibres optique de mesure ($16_1$, $16_2$), et
- un module optique ($13_1$, $13_2$, $15_1$, $15_2$, 41, 54, 55) agencé pour générer, à partir du signal optique source, M + N signaux optiques, M signaux optiques étant injectés dans la première fibre optique de mesure ($16_1$) pour se propager chacun dans l'un des deuxièmes modes de propagation et N signaux optiques étant injectés dans la deuxième fibre optique de mesure ($16_2$) pour se propager chacun dans l'un des quatrièmes modes de propagation, le module optique étant en outre agencé pour transférer les signaux optiques réfléchis vers le dispositif de détection (17).

13. Système de mesure selon la revendication 12, dans lequel le module optique comprend :

- M premières fibres optiques de transmission (54), M étant un entier supérieur ou égal à P, chaque première fibre optique de transmission étant agencée pour transporter un signal optique dans un premier mode de propagation prédéterminé,
- un premier multiplexeur modal ($15_1$) connecté, d'une part, aux M premières fibres optiques (54) et, d'autre part, à la première fibre optique de mesure ($16_1$), le premier multiplexeur modal étant agencé pour transférer les signaux optiques reçus des premières fibres optiques de transmission (54) vers la première fibre optique de mesure ($16_1$) en convertissant chaque premier mode de propagation en l'un des deuxièmes modes de propagation, et agencé pour transférer chaque signal optique réfléchi reçu de la première fibre optique de mesure ($16_1$) vers l'une des premières fibres optiques de transmission (54) en convertissant chaque deuxième mode de propagation en le premier mode de propagation associé à ladite première fibre optique de transmission,
- N deuxièmes fibres optiques de transmission (55), N étant un entier supérieur ou égal à Q, chaque deuxième fibre optique de transmission étant agencée pour transporter un signal optique dans un troisième mode de propagation prédéterminé,
- un deuxième multiplexeur modal ($15_2$) connecté, d'une part, aux N deuxièmes fibres optiques de transmission (55) et, d'autre part, à la deuxième fibre optique de mesure ($16_2$), le deuxième multiplexeur modal étant agencé pour transférer les signaux optiques reçus des deuxièmes fibres optiques de transmission (55) vers la deuxième fibre optique de mesure ($16_2$) en convertissant chaque troisième mode de propagation en l'un des quatrièmes modes de propagation, et agencé pour transférer chaque signal optique réfléchi reçu de la deuxième fibre optique de mesure ($16_2$) vers l'une des deuxièmes fibres optiques de transmission (55) en convertissant chaque quatrième mode de propagation en le troisième mode de propagation associé à ladite deuxième fibre optique de transmission, et
- un diviseur optique (41) ou un commutateur optique (41), le diviseur optique étant agencé pour recevoir le signal optique source, diviser ce signal optique source en M + N signaux optiques, délivrer à chaque première fibre optique de transmission (54) un signal optique dans le premier mode de propagation associé à ladite première fibre optique de transmission (54) et délivrer à chaque deuxième fibre optique de transmission (55) un signal optique dans le troisième mode de propagation associé à ladite deuxième fibre optique de transmission (55), le commutateur optique étant agencé pour recevoir le signal optique source, découper temporellement ce signal optique source en M + N signaux optiques, délivrer à chaque première fibre optique de transmission un signal optique dans le premier mode de propagation associé à ladite première fibre optique de transmission et délivrer à chaque deuxième fibre optique de transmission un signal optique dans le troisième mode de propagation associé à ladite deuxième fibre optique de transmission.

14. Système de mesure selon la revendication 13, dans lequel les premières fibres optiques de transmission (54) et/ou les deuxièmes fibres optiques de transmission (55) sont des fibres optiques monomodes, chacun des premiers modes de propagation et/ou chacun des troisièmes modes de propagation étant le mode fondamental.

15. Système de mesure selon l'une des revendications 12 à 14 comprenant, en outre, une unité de traitement agencée pour déterminer chacun des P + Q paramètres physiques en fonction des longueurs d'onde des signaux optiques réfléchis par les fibres optiques de mesure, de P × M paramètres de sensibilité $K_{PP}(j,i)$ prédéterminés et de Q × N paramètres de sensibilité $K_{PP}(l,k)$ prédéterminés, chaque paramètre de sensibilité $K_{pp}(j,i)$ représentant une sensibilité à un paramètre physique $PP_j$ du premier tronçon de mesure pour le deuxième mode de propagation i, avec i un entier compris entre 1 et M et j un entier compris entre 1 et P, chaque paramètre de sensibilité $K_{PP}(l,k)$ représentant une sensibilité à un paramètre physique $PP_l$ du deuxième tronçon de mesure pour le quatrième mode de propagation k, avec k un entier compris entre 1 et N et I un entier compris entre 1 et Q.

**Patentansprüche**

1. System zur Messung von P physischen Parametern durch Multimode-Glasfaser, wobei P eine Ganzzahl größer oder gleich zwei ist, umfassend:

- eine Lichtquelle (11), die angeordnet ist, um ein optisches Quellsignal zu erzeugen,
- eine Multimode-Mess-Glasfaser (16), die angeordnet ist, um optische Signale in mindestens M vorbestimmten zweiten Ausbreitungsmodi zu übermitteln, die sich voneinander unterscheiden, wobei M eine Ganzzahl größer oder gleich P ist, wobei die Mess-Glasfaser (16) einen Messabschnitt (18) umfasst, der angeordnet ist, um die optischen Signale mit einer variablen Wellenlänge zu reflektieren, in Abhängigkeit von den zu messenden physischen Parametern,
- eine Erfassungsvorrichtung (17, $17_1$, $17_2$, $17_M$, $17_{12}$), die angeordnet ist, um Wellenlängen von optischen Signalen zu messen, die vom Messabschnitt reflektiert werden, und
- ein optisches Modul (13, $13_1$, $13_2$, 14, 15, $15_1$, $15_2$, 41, $42_1$, $42_2$, 43, 44, 45), das angeordnet ist, um M optische Signale ausgehend vom optischen Quellsignal zu erzeugen, wobei die optischen Signale in die Mess-Glasfaser (16) eingespeist werden, um sich jeweils in einem der zweiten Ausbreitungsmodi auszubreiten, wobei das optische Modul ferner angeordnet ist, um die reflektierten optischen Signale an die Erfassungsvorrichtung (17, $17_1$, $17_2$, $17_M$, $17_{12}$) zu übertragen.

2. Messsystem nach Anspruch 1, wobei das optische Modul umfasst:

- M Übertragungs-Glasfasern (14), wobei jede Übertragungs-Glasfaser angeordnet ist, um ein optisches Signal in einem vorbestimmten ersten Ausbreitungsmodus zu übermitteln, und
- einen modalen Multiplexer (15), der auf einer Seite mit den M Übertragungs-Glasfasern (14) verbunden ist und auf der anderen Seite mit der Mess-Glasfaser (16), wobei der modale Multiplexer angeordnet ist, um die von den Übertragungs-Glasfasern empfangenen optischen Signale auf die Mess-Glasfaser zu übertragen, indem jeder erste Ausbreitungsmodus in einen der zweiten Ausbreitungsmodi umgewandelt wird, und angeordnet ist, um jedes reflektierte optische Signal, das von der Mess-Glasfaser empfangen wird, auf eine der Übertragungs-Glasfasern zu übertragen, indem jeder zweite Ausbreitungsmodus in den ersten Ausbreitungsmodus, der der Übertragungs-Glasfaser zugeordnet ist, umgewandelt wird.

3. Messsystem nach Anspruch 2, wobei die Übertragungs-Glasfasern (14) Singlemode-Glasfasern sind, wobei jeder der ersten Ausbreitungsmodi der Grundmodus ist.

4. Messsystem nach einem der Ansprüche 2 und 3, ferner einen optischen Teiler (13) umfassend, der angeordnet ist, um das optische Quellsignal zu empfangen, dieses optische Quellsignal in M optische Signale aufzuteilen und jeder Übertragungs-Glasfaser (14) ein optisches Signal im ersten Ausbreitungsmodus, der der Übertragungs-Glasfaser zugeordnet ist, zu liefern.

5. Messsystem nach Anspruch 4, wobei der optische Teiler (13) ferner angeordnet ist, um die reflektierten optischen Signale, die von den Übertragungs-Glasfasern (14) empfangen werden, zu empfangen, diese reflektierten optischen Signale zu addieren, um ein wiederhergestelltes optisches Signal zu erhalten, und das wiederhergestellte optische Signal an die Erfassungsvorrichtung (17) zu liefern, wobei das Messsystem (10) ferner einen optischen Zirkulator (12) umfasst, der angeordnet ist, um das optische Quellsignal von der Lichtquelle (11) an den optischen Teiler (13) zu übertragen, und um das wiederhergestellte optische Signal an die Erfassungsvorrichtung (17) zu übertragen.

6. Messsystem nach einem der Ansprüche 2 und 3, ferner einen optischen Wechselschalter (13) umfassend, der angeordnet ist, um das optische Quellsignal zu empfangen, dieses optische Quellsignal zeitlich in M optische Signale zu zerlegen und jeder Übertragungs-Glasfaser (14) ein optisches Signal im ersten Ausbreitungsmodus, der der Übertragungs-Glasfaser zugeordnet ist, zu liefern.

7. Messsystem nach Anspruch 6, wobei der optische Wechselschalter (13) ferner angeordnet ist, um die reflektierten optischen Signale, die von den Übertragungs-Glasfasern (14) empfangen werden, zu empfangen, diese reflektierten optischen Signale zeitlich aneinanderzufügen, um ein wiederhergestelltes optisches Signal zu erhalten, und das wiederhergestellte optische Signal an die Erfassungsvorrichtung (17) zu liefern, wobei das Messsystem (10) ferner einen optischen Zirkulator umfasst, der angeordnet ist, um das optische Quellsignal von der Lichtquelle auf den optischen Wechselschalter zu übertragen und um das wiederhergestellte optische Signal auf die Erfassungsvorrichtung zu übertragen.

8. Messsystem nach einem der Ansprüche 2 bis 4 und 6, wobei die Erfassungsvorrichtung K Detektoren ($17_1$, $17_2$, $17_M$, $17_{12}$) umfasst, wobei K eine Ganzzahl größer oder gleich zwei ist und kleiner oder gleich M, wobei jeder Detektor angeordnet ist, um eine Wellenlänge eines oder mehrerer reflektierter optischer Signale, die von einer oder mehreren Übertragungs-Glasfasern (14) empfangen werden, zu messen.

**9.** Messsystem nach Anspruch 1, wobei das optische Modul umfasst:

- X erste Übertragungs-Glasfasern (44), wobei X eine Ganzzahl größer oder gleich zwei ist, wobei jede erste Übertragungs-Glasfaser angeordnet ist, um ein optisches Signal in einem vorbestimmten ersten Ausbreitungsmodus zu übermitteln,

- eine zweite Multimode-Übertragungs-Glasfaser ($42_1$), die angeordnet ist, um optische Signale in mindestens X vorbestimmten zweiten Ausbreitungsmodi, die sich voneinander unterscheiden, zu übermitteln,

- Y dritte Übertragungs-Glasfasern (45), wobei Y eine Ganzzahl größer oder gleich zwei ist, wobei jede dritte Übertragungs-Glasfaser angeordnet ist, um ein optisches Signal in einem vorbestimmten dritten Ausbreitungsmodus zu übermitteln, wobei die Summe von X und Y gleich M ist,

- eine vierte Multimode-Übertragungs-Glasfaser ($42_2$), die angeordnet ist, um optische Signale in mindestens Y vorbestimmten zweiten Ausbreitungsmodi, die sich voneinander unterscheiden, zu übermitteln, und X zweiten Ausbreitungsmodi,

- einen ersten modalen Multiplexer ($15_1$), der auf einer Seite mit den X ersten Übertragungs-Glasfasern (44) verbunden ist und auf der anderen Seite mit der zweiten Übertragungs-Glasfaser ($42_1$), wobei der erste modale Multiplexer angeordnet ist, um von den ersten Übertragungs-Glasfasern empfangene optische Signale auf die zweite Übertragungs-Glasfaser zu übertragen, indem jeder erste Ausbreitungsmodus in einen der X zweiten Ausbreitungsmodi umgewandelt wird, und angeordnet ist, um jedes reflektierte optische Signal, das von der zweiten Übertragungs-Glasfaser empfangen wird, auf eine der ersten Übertragungs-Glasfasern zu übertragen, indem jeder zweite Ausbreitungsmodus in den ersten Ausbreitungsmodus, der der ersten Übertragungs-Glasfaser zugeordnet ist, umgewandelt wird,

- einen zweiten modalen Multiplexer ($15_2$), der auf einer Seite mit den Y dritten Übertragungs-Glasfasern (45) verbunden ist und auf der anderen Seite mit der vierten Übertragungs-Glasfaser ($42_2$), wobei der zweite modale Multiplexer angeordnet ist, um die von den dritten Übertragungs-Glasfasern empfangenen optischen Signale auf die vierte Übertragungs-Glasfaser zu übertragen, indem jeder dritte Ausbreitungsmodus in einen der Y zweiten Ausbreitungsmodi umgewandelt wird, und angeordnet ist, um jedes reflektierte optische Signal, das von der vierten Übertragungs-Glasfaser empfangen wird, auf eine der dritten Übertragungs-Glasfasern zu übertragen, indem jeder zweite Ausbreitungsmodus in den dritten Ausbreitungsmodus, der der dritten Übertragungs-Glasfaser zugeordnet ist, umgewandelt wird,

- einen quellenseitigen optischen Teiler ($13_1$, $13_2$, 41) oder einen quellenseitigen optischen Wechselschalter ($13_1$, $13_2$, 41), wobei der quellenseitige optische Teiler angeordnet ist, um das optische Quellsignal zu empfangen, dieses optische Quellsignal in X + Y optische Signale aufzuteilen, jeder ersten Übertragungs-Glasfaser (44) ein optisches Signal im ersten Ausbreitungsmodus, der der ersten Übertragungs-Glasfaser zugeordnet ist, zu liefern, und jeder dritten Übertragungs-Glasfaser (45) ein optisches Signal im dritten Ausbreitungsmodus, der der dritten Übertragungs-Glasfaser zugeordnet ist, zu liefern, wobei der quellenseitige optische Wechselschalter angeordnet ist, um das optische Quellsignal zu empfangen, das optische Quellsignal zeitlich in X + Y optische Signale zu zerlegen, jeder ersten Übertragungs-Glasfaser (44) ein optisches Signal im ersten Ausbreitungsmodus, der der ersten Übertragungs-Glasfaser zugeordnet ist, zu liefern, und jeder dritten Übertragungs-Glasfaser (45) ein optisches Signal im dritten Ausbreitungsmodus, der der dritten Übertragungs-Glasfaser zugeordnet ist, zu liefern, und

- einen messseitigen optischen Teiler (43) oder einen messseitigen optischen Wechselschalter (43), wobei der messseitige optische Teiler angeordnet ist, um auf einer Seite die optischen Signale, die aus dem ersten modalen Multiplexer ($15_1$) und dem zweiten modalen Multiplexer ($15_2$) hervorgegangen sind, zu empfangen, diese optischen Signale zu addieren, um ein gemeinsames optisches Signal zu erhalten und dieses gemeinsame optische Signal an die Mess-Glasfaser (16) zu liefern, und auf der anderen Seite ein reflektiertes gemeinsames optisches Signal zu empfangen, dieses reflektierte gemeinsame optische Signal in zwei optische Signale aufzuteilen, und jedes dieser optischen Signale an einen der ersten und zweiten modalen Multiplexer ($15_1$, $15_2$) zu liefern, wobei der messseitige optische Wechselschalter angeordnet ist, um auf einer Seite die optischen Signale, die aus dem ersten modalen Multiplexer ($15_1$) und dem zweiten modalen Multiplexer ($15_2$) hervorgegangen sind, zu empfangen, diese optischen Signale zeitlich aneinanderzufügen, um ein gemeinsames optisches Signal zu erhalten, und dieses gemeinsame optische Signal an die Mess-Glasfaser (16) zu liefern, und auf der anderen Seite ein reflektiertes gemeinsames optisches Signal zu empfangen, dieses reflektierte gemeinsame optische Signal zeitlich in zwei optische Signale zu zerlegen und jedes dieser optischen Signale an einen der ersten und zweiten modalen Multiplexer ($15_1$, $15_2$) zu liefern.

10. Messsystem nach Anspruch 9, wobei die ersten Übertragungs-Glasfasern (44) und/oder die dritten Übertragungs-Glasfasern (45) Singlemode-Glasfasern sind, wobei jeder der ersten Ausbreitungsmodi und/oder jeder der dritten Ausbreitungsmodi der Grundmodus ist.

11. Messsystem nach einem der vorhergehenden Ansprüche, das ferner eine Verarbeitungseinheit umfasst, die angeordnet ist, um jeden der P physischen Parameter zu bestimmen in Abhängigkeit von den Wellenlängen der vom Messabschnitt reflektierten optischen Signale und den vorbestimmten $P \times M$ Parametern der Sensitivität $K_{PP}(j,i)$, wobei jeder Sensitivitäts-Parameter $K_{PP}(j,i)$ eine Sensitivität gegenüber einem physischen Parameter $PP_j$ des Messabschnitts für den zweiten Ausbreitungsmodus i darstellt, wobei i eine Ganzzahl zwischen 1 und M ist und j eine Ganzzahl zwischen 1 und P.

12. Messsystem von P + Q physischen Parametern durch Multimode-Glasfasern, wobei P und Q zwei Ganzzahlen größer oder gleich zwei sind, umfassend:

     - eine Lichtquelle (11), die angeordnet ist, um ein optisches Quellsignal zu erzeugen,
     - eine erste Multimode-Mess-Glasfaser ($16_1$), die angeordnet ist, um optische Signale in mindestens M vorbestimmten zweiten Ausbreitungsmodi, die sich voneinander unterscheiden, zu übermitteln, wobei M eine Ganzzahl größer oder gleich P ist, wobei die erste Mess-Glasfaser einen ersten Messabschnitt ($18_1$) umfasst, der angeordnet ist, um die optischen Signale mit einer variablen Wellenlänge zu reflektieren, in Abhängigkeit von den zu messenden physischen Parametern,
     - eine zweite Multimode-Mess-Glasfaser ($16_2$), die angeordnet ist, um optische Signale in mindestens N vorbestimmten vierten Ausbreitungsmodi, die sich voneinander unterscheiden, zu übermitteln, wobei N eine Ganzzahl größer oder gleich Q ist, wobei die zweite Mess-Glasfaser einen zweiten Messabschnitt ($18_2$) umfasst, der angeordnet ist, um die optischen Signale mit einer variablen Wellenlänge zu reflektieren, in Abhängigkeit von den zu messenden physischen Parametern,
     - eine Erfassungsvorrichtung (17), die angeordnet ist, um die Wellenlängen der optischen Signale zu messen, die von jeder der Mess-Glasfasern ($16_1$, $16_2$) reflektiert werden, und
     - ein optisches Modul ($13_1$, $13_2$, $15_1$, $15_2$, 41, 54, 55), das angeordnet ist, um M + N optische Signale ausgehend vom optischen Quellsignal M zu erzeugen, wobei M optische Signale in die erste Mess-Glasfaser ($16_1$) eingespeist werden, um sich jeweils in einem der zweiten Ausbreitungsmodi auszubreiten, und N optische Signale in die zweite Mess-Glasfaser ($16_2$) eingespeist werden, um sich jeweils in einem der vierten Ausbreitungsmodi auszubreiten, wobei das optische Modul ferner angeordnet ist, um die reflektierten optischen Signale an die Erfassungsvorrichtung (17) zu übertragen.

13. Messsystem nach Anspruch 12, wobei das optische Modul umfasst:

     - M erste Übertragungs-Glasfasern (54), wobei M eine Ganzzahl größer oder gleich P ist, wobei jede erste Übertragungs-Glasfaser angeordnet ist, um ein optisches Signal in einem vorbestimmten ersten Ausbreitungsmodus zu übermitteln,
     - einen ersten modalen Multiplexer ($15_1$), der auf einer Seite mit den ersten M Glasfasern (54) verbunden ist und auf der anderen Seite mit der ersten optischen Mess-Glasfaser ($16_1$), wobei der erste modale Multiplexer angeordnet ist, um die von den ersten Übertragungs-Glasfasern (54) empfangenen optischen Signale auf die erste Mess-Glasfaser ($16_1$) zu übertragen, indem jeder erste Ausbreitungsmodus in einen der zweiten Ausbreitungsmodi umgewandelt wird, und angeordnet ist, um jedes reflektierte optische Signal, das von der ersten optischen Mess-Glasfaser ($16_1$) empfangen wird, auf eine der ersten Übertragungs-Glasfasern (54) zu übertragen, indem jeder zweite Ausbreitungsmodus in den ersten Ausbreitungsmodus, der der ersten Übertragungs-Glasfaser zugeordnet ist, umgewandelt wird,
     - N zweite Übertragungs-Glasfasern (55), wobei N eine Ganzzahl größer oder gleich Q ist, wobei jede zweite Übertragungs-Glasfaser angeordnet ist, um ein optisches Signal in einem vorbestimmten dritten Ausbreitungsmodus zu übermitteln,
     - einen zweiten modalen Multiplexer ($15_2$), der auf einer Seite mit den N zweiten Übertragungs-Glasfasern (55) verbunden ist und auf der anderen Seite mit der zweiten optischen Mess-Glasfaser ($16_2$), wobei der zweite modale Multiplexer angeordnet ist, um die von den zweiten Übertragungs-Glasfasern (55) empfangenen optischen Signale auf die zweite Mess-Glasfaser ($16_2$) zu übertragen, indem jeder dritte Ausbreitungsmodus in einen der vierten optischen Ausbreitungsmodi umgewandelt wird, und angeordnet ist, um jedes reflektierte optische Signal, das von der zweiten optischen Mess-Glasfaser ($16_2$) empfangen wird, auf eine der zweiten Übertragungs-Glasfasern (55) zu übertragen, indem jeder vierte Ausbreitungsmodus in den dritten Ausbreitungsmodus, der der zweiten Übertragungs-Glasfaser zugeordnet ist, umgewandelt wird, und

- einen optischen Teiler (41) oder einen optischen Wechselschalter (41), wobei der optische Teiler angeordnet ist, um das optische Quellsignal zu empfangen, dieses optische Quellsignal in M + N optische Signale aufzuteilen, jeder ersten Übertragungs-Glasfaser (54) ein optisches Signal im ersten Ausbreitungsmodus, der der ersten Übertragungs-Glasfaser (54) zugeordnet ist, zu liefern, und jeder zweiten Übertragungs-Glasfaser (55) ein optisches Signal im dritten Ausbreitungsmodus, der der zweiten Übertragungs-Glasfaser (55) zugeordnet ist, zu liefern, wobei der optische Wechselschalter angeordnet ist, um das optische Quellsignal zu empfangen, dieses optische Quellsignal zeitlich in M + N optische Signale zu zerlegen, jeder ersten Übertragungs-Glasfaser ein optisches Signal im ersten Ausbreitungsmodus, der der ersten Übertragungs-Glasfaser zugeordnet ist, zu liefern, und jeder zweiten Übertragungs-Glasfaser ein optisches Signal im dritten Ausbreitungsmodus, der der zweiten Übertragungs-Glasfaser zugeordnet ist, zu liefern.

14. Messsystem nach Anspruch 13, wobei die ersten Übertragungs-Glasfasern (54) und/oder die zweiten Übertragungs-Glasfasern (55) Singlemode-Glasfasern sind, wobei jeder der ersten Ausbreitungsmodi und/oder jeder der dritten Ausbreitungsmodi der Grundmodus ist.

15. Messsystem nach einem der Ansprüche 12 bis 14, das ferner eine Verarbeitungseinheit umfasst, die angeordnet ist, um jeden der P + Q physischen Parameter zu bestimmen in Abhängigkeit von den Wellenlängen der von den optischen Mess-Glasfasern reflektierten optischen Signale, den vorbestimmten P × M Parametern der Sensitivität $K_{PP}(j,i)$ und den vorbestimmten Q × N Parametern der Sensitivität $K_{PP}(l,k)$, wobei jeder Sensitivitäts-Parameter $K_{PP}(j,i)$ eine Sensitivität gegenüber einem physischen Parameter $PP_j$ des ersten Messabschnitts für den zweiten Ausbreitungsmodus i darstellt, wobei i eine Ganzzahl zwischen 1 und M ist und j eine Ganzzahl zwischen 1 und P, wobei jeder Sensitivitäts-Parameter $K_{PP}(l,k)$ eine Sensitivität gegenüber einem physischen Parameter $PP_l$ des zweiten Messabschnitts für den vierten Ausbreitungsmodus k darstellt , wobei k eine Ganzzahl zwischen 1 und N ist und I eine Ganzzahl zwischen 1 und Q.

**Claims**

1. System for measuring P physical parameters with a multimode optical fiber, P being an integer greater than or equal to two, including:

   - a light source (11), arranged to generate a source optical signal,
   - a multimode measurement optical fiber (16) arranged to transport optical signals in at least M second predetermined propagation modes that are distinct from one another, M being an integer greater than or equal to P, the measurement optical fiber (16) including a measurement section (18) arranged to reflect the optical signals with a wavelength that is variable according to the physical parameters to be measured,
   - a detection device (17, $17_1$, $17_2$, $17_M$, $17_{12}$) arranged to measure wavelengths of the optical signals reflected by the measurement section, and
   - an optical module (13, $13_1$, $13_2$, 14, 15, $15_1$, $15_2$, 41, $42_1$, $42_2$, 43, 44, 45) arranged to generate M optical signals from the source optical signal, the optical signals being injected into the measurement optical fiber (16) in order to propagate each in one of the second propagation modes, the optical module also being arranged to transfer the optical signals reflected toward the detection device (17, $17_1$, $17_2$, $17_M$, $17_{12}$).

2. Measurement system according to claim 1, wherein the optical module includes:

   - M transmission optical fibers (14), each transmission optical fiber being arranged to transport an optical signal in a first predetermined propagation mode, and
   - a mode multiplexer (15) connected, on the one hand, to the M transmission optical fibers (14) and, on the other hand, to the measurement optical fiber (16), the mode multiplexer being arranged to transfer the optical signals received from the transmission optical fibers to the measurement optical fiber by converting each first propagation mode into one of the second propagation modes, and arranged to transfer each reflected optical signal received from the measurement optical fiber to one of the transmission optical fibers by converting each second propagation mode into the first propagation mode associated with said transmission optical fiber.

3. Measurement system according to claim 2, wherein the transmission optical fibers (14) are single-mode optical fibers, each of the first propagation modes being the fundamental mode.

4. Measurement system according to one of claims 2 and 3 additionally including an optical splitter (13) arranged to receive the source optical signal, to split this source optical signal into M optical signals and to deliver, to each transmission optical fiber (14), an optical signal in the first propagation mode associated with said transmission optical fiber.

5. Measurement system according to claim 4, wherein the optical splitter (13) is also arranged to receive the reflected optical signals received from the transmission optical fibers (14), to add these reflected optical signals in order to obtain a reconstituted optical signal and to deliver said reconstituted optical signal to the detection device (17), the measurement system (10) additionally including an optical circulator (12) arranged to transfer the source optical signal from the light source (11) to the optical splitter (13) and to transfer the reconstituted optical signal to the detection device (17).

6. Measurement system according to one of claims 2 and 3 additionally including an optical switch (13) arranged to receive the source optical signal, to temporally divide this source optical signal into M optical signals and to deliver, to each transmission optical fiber (14), an optical signal in the first propagation mode associated with said transmission optical fiber.

7. Measurement system according claim 6, wherein the optical switch (13) is also arranged to receive the reflected optical signals received from the transmission optical fibers (14), to temporally join these reflected optical signals in order to obtain a reconstituted optical signal and to deliver said reconstituted optical signal to the detection device (17), the measurement system (10) additionally including an optical circulator arranged to transfer the source optical signal from the light source to the optical switch and to transfer the reconstituted optical signal to the detection device.

8. Measurement system according to one of claims 2 to 4 and 6, wherein the detection device includes K detectors ($17_1$, $17_2$, $17_M$, $17_{12}$), K being an integer greater than or equal to two and less than or equal to M, each detector being arranged to measure a wavelength of one or more reflected optical signals received from one or more transmission optical fibers (14).

9. Measurement system according to claim 1, wherein the optical module includes:

- X first transmission optical fibers (44), X being an integer greater than or equal to two, each first transmission optical fiber being arranged to transport an optical signal in a first predetermined propagation mode,
- a second multimode transmission optical fiber ($42_1$) arranged to transport optical signals in at least X second predetermined propagation modes that are distinct from one another,
- Y third transmission optical fibers (45), Y being an integer greater than or equal to two, each third transmission optical fiber being arranged to transport an optical signal in a third predetermined propagation mode, the sum of X and Y being equal to M,
- a fourth multimode transmission optical fiber (42z) arranged to transport optical signals in at least Y second predetermined propagation modes that are distinct from one another and from the X second propagation modes,
- a first mode multiplexer ($15_1$) connected, on the one hand, to the X first transmission optical fibers (44) and, on the other hand, to the second transmission optical fiber ($42_1$), the first mode multiplexer being arranged to transfer the optical signals received from the first transmission optical fibers to the second transmission optical fiber by converting each first propagation mode into one of the X second propagation modes, and arranged to transfer each reflected optical signal received from the second transmission optical fiber to one of the first transmission optical fibers by converting each second propagation mode into the first propagation mode associated with said first transmission optical fiber,
- a second mode multiplexer ($15_2$) connected, on the one hand, to the Y third transmission optical fibers (45) and, on the other hand, to the fourth transmission optical fiber ($42_2$), the second mode multiplexer being arranged to transfer the optical signals received from the third transmission optical fibers to the fourth transmission optical fiber by converting each third propagation mode into one of the Y second propagation modes, and arranged to transfer each reflected optical signal received from the fourth transmission optical fiber to one of the third transmission optical fibers by converting each second propagation mode into the third propagation mode associated with said third transmission optical fiber,
- a source-side optical splitter ($13_1$, $13_2$, 41) or a source-side optical switch ($13_1$, $13_2$, 41), the source-side optical splitter being arranged to receive the source optical signal, to split this source optical signal into X + Y optical signals, to deliver, to each first transmission optical fiber (44) an optical signal in the first propagation mode associated with said first transmission optical fiber and to deliver, to each third transmission optical fiber (45) an optical signal in the third propagation mode associated with said third transmission optical fiber, the source-side optical switch being arranged to receive the source optical signal, to temporally divide this source optical signal into X + Y optical signals, to deliver, to each first transmission optical fiber (44), an optical signal in the first propagation mode associated with said first transmission optical fiber, and to deliver, to each third transmission optical fiber (45) an optical signal in the third propagation mode associated with said third transmission optical fiber, and

- a measurement-side optical splitter (43) or a measurement-side optical switch (43), the measurement-side optical splitter being arranged, on the one hand, to receive the optical signals from the first mode multiplexer ($15_1$) and the second mode multiplexer ($15_2$), to add these optical signals in order to obtain a common optical signal, and to deliver this common optical signal to the measurement optical fiber (16) and, on the other hand, to receive a reflected common optical signal, to split this reflected common optical signal into two optical signals and to deliver each of these optical signals to one of the first and second mode multiplexers ($15_1$, $15_2$), the measurement-side optical switch being arranged, on the one hand, to receive the optical signals from the first mode multiplexer ($15_1$) and the second mode multiplexer ($15_2$), to temporally join these optical signals in order to obtain a common optical signal and to deliver this common optical signal to the measurement optical fiber (16) and, on the other hand, to receive a reflected common optical signal, to temporally divide this reflected common optical signal into two optical signals and to deliver each of these optical signals to one of the first and second mode multiplexers ($15_1$, $15_2$).

10. Measurement system according to claim 9, wherein the first transmission optical fibers (44) and/or the third transmission optical fibers (45) are single-mode fibers, each of the first propagation modes and/or each of the third propagation modes being the fundamental mode.

11. Measurement system according to one of the previous claims, additionally including a processing unit arranged to determine each of the P physical parameters according to wavelengths of the optical signals reflected by the measurement section and P × M predetermined sensitivity parameters $K_{PP}(j,i)$, each sensitivity parameter $K_{PP}(j,i)$ representing a sensitivity to a physical parameter $PP_j$ of the measurement section for the second propagation mode i, with i being an integer between 1 and M and j being an integer between 1 and P.

12. System for measuring P + Q physical parameters with multimode optical fibers, P and Q being two integers greater than or equal to two, including:

- a light source (11), arranged to generate a source optical signal,
- a first multimode measurement optical fiber ($16_1$) arranged to transport optical signals in at least M second predetermined propagation modes that are distinct from one another, M being an integer greater than or equal to P, the first measurement optical fiber including a first measurement section ($18_1$) arranged to reflect the optical signals with a wavelength that is variable according to the physical parameters to be measured,
- a second multimode measurement optical fiber (16z) arranged to transport optical signals in at least N predetermined fourth propagation modes that are distinct from one another, N being an integer greater than or equal to Q, the second measurement optical fiber including a second measurement section ($18_2$) arranged to reflect the optical signals with a wavelength that is variable according to the physical parameters to be measured,
- a detection device (17) arranged to measure wavelengths of the optical signals reflected by each of the measurement optical fibers ($16_1$, $16_2$), and
- an optical module ($13_1$, $13_2$, $15_1$, $15_2$, 41, 54, 55) arranged to generate, from the source optical signal, M + N optical signals, M optical signals being injected into the first measurement optical fiber ($16_1$) so as each to propagate in one of the second propagation modes and N optical signals being injected into the second measurement optical fiber ($16_2$) so as each to propagate in one of the fourth propagation modes, the optical module additionally being arranged to transfer the reflected optical signals to the detection device (17).

13. Measurement system according to claim 12, wherein the optical module includes:

- M first transmission optical fibers (54), M being an integer greater than or equal to P, each first transmission optical fiber being arranged to transport an optical signal in a first predetermined propagation mode,
- a first mode multiplexer ($15_1$) connected, on the one hand, to the M first optical fibers (54) and, on the other hand, to the first measurement optical fiber ($16_1$), the first mode multiplexer being arranged to transfer the optical signals received from the first transmission optical fibers (54) to the first measurement optical fiber ($16_1$) by converting each first propagation mode into one of the second propagation modes, and arranged to transfer each reflected optical signal received from the first measurement optical fiber ($16_1$) to one of the first transmission optical fibers (54) by converting each second propagation mode into the first propagation mode associated with said first transmission optical fiber,

- N second transmission optical fibers (55), N being an integer greater than or equal to Q, each second transmission optical fiber being arranged to transport an optical signal in a third predetermined propagation mode,

- a second mode multiplexer ($15_2$) connected, on the one hand, to the N second transmission optical fibers (55) and, on the other hand, to the second measurement optical fiber ($16_2$), the second mode multiplexer being arranged to transfer the optical signals received from the second transmission optical fibers (55) to the second measurement optical fiber ($16_2$) by converting each third propagation mode into one of the fourth propagation modes, and arranged to transfer each reflected optical signal received from the second measurement optical fiber ($16_2$) to one of the second transmission optical fibers (55) by converting each fourth propagation mode into the third propagation mode associated with said second transmission optical fiber, and

- an optical splitter (41) or an optical switch (41), the optical splitter being arranged to receive the source optical signal, to split this source optical signal into M + N optical signals, to deliver, to each first transmission optical fiber (54) an optical signal in the first propagation mode associated with said first transmission optical fiber (54) and to deliver, to each second transmission optical fiber (55) an optical signal in the third propagation mode associated with said second transmission optical fiber (55), the optical switch being arranged to receive the source optical signal, to temporally divide this source optical signal into M + N optical signals, to deliver, to each first transmission optical fiber, an optical signal in the first propagation mode associated with said first transmission optical fiber, and to deliver, to each second transmission optical fiber, an optical signal in the third propagation mode associated with said second transmission optical fiber.

14. Measurement system according to claim 13, wherein the first transmission optical fibers (54) and/or the second transmission optical fibers (55) are single-mode optical fibers, each of the first propagation modes and/or each of the third propagation modes being the fundamental mode.

15. Measurement system according to one of claims 12 to 14 additionally including a processing unit arranged to determine each of the P + Q physical parameters according to the wavelengths of the optical signals reflected by the measurement optical fibers, P × M predetermined sensitivity parameters $K_{PP}(j,i)$ and Qx N predetermined sensitivity parameters $K_{PP}(l,k)$, each sensitivity parameter $K_{PP}(j,i)$ representing a sensitivity to a physical parameter $PP_j$ of the first measurement section for the second propagation mode i, with i being an integer between 1 and M and j being an integer between 1 and P, each sensitivity parameter $K_{PP}(l,k)$ representing a sensitivity to a physical parameter $PP_l$ of the second measurement section for the fourth propagation mode k, with k being an integer between 1 and N and l being an integer between 1 and Q.

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017010463 A1

**Littérature non-brevet citée dans la description**

- **CHAO LI et al.** Simultaneous measurement of refractive index, strain, and température based on a four-core fiber combined with a fiber Bragg grating. *Optics & Laser Technology,* 2017, vol. 90, 179-184
- **JIRAPONG LIM et al.** Strain and Température Sensors Using Multimode Optical Fiber Bragg Gratings and Corrélation Signal Processing. *IEEE Transactions on Intrumentation and Measurement,* 01 Août 2002, vol. 51 (4

- Sensing with a LP01-LP02 intermodal interferometer. **EFTIMOV et al.** Journal of Lightwave Technology. IEEE, 01 Décembre 1993, vol. 11, 2150-2156
- **SHUO FANG et al.** A Smart Graded-index Multimode Fiber Based Sensor Unit for Multi-parameter Sensing Applications. *Optics and Photonics Journal,* 01 Janvier 2013, vol. 03 (02), 265-267
- Multiparameter POF Sensing Based on Multimode interférence and Fiber Bragg Grating. **OLIVEIRA RICARDO et al.** Journal of Lightwave Technology. IEEE, 01 Janvier 2017, vol. 35, 3-9